# EUROPÄISCHE PATENTSCHRIFT

(11) **EP 2 656 930 B1**
(45) Veröffentlichungstag und Bekanntmachung des Hinweises auf die Patenterteilung: **27.03.2019**
(21) Anmeldenummer: 13163576.5
(22) Anmeldetag: 12.04.2013
(51) Int. Cl.: A46B 5/00, B08B 1/04, A46B 13/00, A46B 13/02, F24S 40/20

(54) **Reinigungsgerät und Reinigungsverfahren für ebene Reinigungsflächen**
Cleaning device and cleaning method for level cleaning surfaces
Appareil de nettoyage et procédé de nettoyage pour des surfaces de nettoyage planes

(30) Priorität: 24.04.2012 DE 102012103574
(43) Veröffentlichungstag der Anmeldung: 30.10.2013
(73) Patentinhaber: MULAG FAHRZEUGWERK Heinz Wössner GmbH & CO. KG, 77728 Oppenau (DE)
(72) Erfinder: Spinner, Frank, 77728 Oppenau (DE)
(74) Vertreter: Weickmann & Weickmann PartmbB

(56) Entgegenhaltungen:
- EP-A1- 2 153 914
- EP-A1- 2 295 158
- DE-A1-102010 011 385
- DE-U1-202011 051 073
- DE-U1-202011 105 493

## Beschreibung

### I. Anwendungsgebiet

Die Erfindung betrifft die Reinigung ebener, vorzugsweise schräg stehender, Reinigungsflächen, beispielsweise die Flächen von Solaranlagen.

### II. Technischer Hintergrund

Es kann unterschiedliche Gründe geben, um bestimmte Flächen, die Reinigungsflächen, regelmäßig zu reinigen.

Neben rein optischen Gründen können dies funktionale Gründe sein, beispielsweise bei den Oberflächen von Solarzellen, die mit zunehmender Verschmutzung, insbesondere Verstaubung, in ihrem Wirkungsgrad stark nachlassen aufgrund der geringeren Menge von Sonnenlicht, das die Solarzellen erreicht.

Es sind prinzipiell an den Reinigungsflächen montierte Reinigungsvorrichtungen einerseits und mobile, an die Reinigungsflächen bei Bedarf herangeführte, Reinigungsgeräte andererseits bekannt.

Bei den auf dem Untergrund montierten, schräg ansteigenden Solarflächen ist es bereits bekannt, mit einem Reinigungsfahrzeug in den Gassen zwischen den Solarflächen entlang zu fahren und mit einem Reinigungskopf, der mittels eines Auslegerarmes vom Reinigungsfahrzeug aus getragen und geführt wird, und der eine Sprüheinrichtung für Reinigungsflüssigkeit und/oder rotierende Bürsten aufweist, um die Reinigungsfläche zu reinigen.

Zum Zwecke des schnellen Reinigungsfortschrittes soll der Reinigungskopf dabei eine möglichst große Erstreckung quer zur Fortschrittsrichtung der Reinigung, also der Fahrtrichtung des Reinigungsfahrzeuges, besitzen. Gerade bei einem Reinigungskopf mit rotierenden Bürsten ergibt dies zum einen ein sehr großes Gewicht des Reinigungskopfes, was Probleme sowohl in statischer als auch dynamischer Hinsicht verursacht im Zusammenspiel mit dem Reinigungsfahrzeug und bei der Durchführung des Reinigungsvorganges.

In diesem Zusammenhang ist aus der DE 20 2011 051 073 U1, die den nächstreichenden Stand der Technik darstellt, ein Reinigungskopf an einem Auslegerarm bekannt, der sich über die gesamte Breite der zu reinigenden Reinigungsfläche erstreckt, und auch in Relation zur Breite des ihn tragenden Reinigungsfahrzeuges länger ist als dessen Breite beträgt.

Allerdings besteht der Reinigungskopf aus einer Vielzahl von Topfbürsten, die in z.B. zwei hintereinander liegenden Reihen angeordnet sind.

Aus dem DE 20 2011 105 493 U1 ist ebenfalls ein Reinigungskopf mit einer langen zylindrischen Bürste zum Reinigen einer ebenen Reinigungsfläche an einem Auslegerarm dargestellt, der an einem Trägerfahrzeug befestigt werden kann.

### III. Darstellung der Erfindung

### a) Technische Aufgabe

Es ist daher die Aufgabe gemäß der Erfindung, ein Reinigungsgerät bzw. ein Reinigungsfahrzeug zur Verfügung zu stellen, welches auch bei einem großen Reinigungskopf eine Reinigung der Reinigungsflächen ohne Beschädigungsgefahr für die Reinigungsflächen und bei guter Handhabbarkeit des Reinigungsgerätes ermöglicht.

### b) Lösung der Aufgabe

Diese Aufgabe wird durch die Merkmale der Ansprüche **1** und **16** gelöst. Vorteilhafte Ausführungsformen ergeben sich aus den Unteransprüchen.

Indem der Reinigungskopf eine Längserstreckung in seiner Längsrichtung aufweist, die mindestens so groß ist wie die Breite der zu reinigenden Reinigungsfläche, gemessen quer zur Fortschrittsrichtung, kann durch Entlangbewegen des Reinigungskopfes in Fortschrittsrichtung die Reinigungsfläche in einem einzigen Durchgang gereinigt werden.

Der Reinigungskopf umfasst eine in Erstreckungsrichtung des Reinigungskopfes verlaufende Befestigungs-Traverse, an der sich die Kopplungseinrichtung zum Ankoppeln des Reinigungskopfes an dem Auslegerarm befindet, vorzugsweise in der Mitte der Traverse und damit auch in der Mitte des Reinigungskopfes.

Diese Traverse ist mit dem Rahmen des Reinigungskopfes gelenkig verbunden, so dass ein Wegkippen des Reinigungskopfes z.B. entgegen der Fortschrittsrichtung möglich ist, beispielsweise falls der Reinigungskopf mit zu hoher Auflagekraft gegen die Reinigungsfläche gepresst wird. Zu diesem Zweck sind die Gelenkachsen vorzugsweise in Erstreckungsrichtung des Reinigungskopfes verlaufend gewählt.

Zu diesem Zweck ist der Reinigungskopf in seiner Erstreckungsrichtung mindestens **1**,**5-**mal, besser **2**-mal so lang wie die Breite des Trägerfahrzeuges.

Sofern es sich bei den Reinigungsflächen um in Fortschrittsrichtung relativ kurze Flächen, beispielsweise einzelne große Tafeln, handelt, kann dabei das Reinigungsgerät auch still stehen, und während des Arbeitseinsatzes nur der Auslegerarm den Reinigungskopf in Fortschrittsrichtung entlang der Reinigungsfläche bewegen, was die Abstandssteuerung des Reinigungskopfes zur Reinigungsfläche erleichtert und das Beschädigungsrisiko an Reinigungsflächen vermindert, da hierdurch alle durch einen unebenen Untergrund und das Darüberfahren des Reinigungsfahrzeuges auftretenden Wankbewegungen des Auslegerarmes und damit des Reinigungskopfes vermieden werden.

Die Bürste kann vorzugsweise eine Zylinderbürste mit axialer Erstreckung in Richtung Erstreckung des Reinigungskopfes sein, oder der Reinigungskopf kann mehrere in seiner Erstreckungsrichtung aneinander anschließende Topfbürsten umfassen.

Hierzu umfasst der Reinigungskopf in aller Regel einen Rahmen, in dem die eine oder mehreren Reinigungsbürsten aufgenommen sind. Statt einer einzigen in Erstreckungsrichtung des Reinigungskopfes verlaufenden Zylinderbürste können es auch zwei oder mehr aneinander anschließende Zylinderbürsten sein.

Der Reinigungskopf umfasst vorzugsweise noch weitere Elemente wie etwa Sprühleisten vor und hinter dem Reinigungskopf - in Fortschrittsrichtung betrachtet -, wobei die Sprühleisten ganz unterschiedliche Funktionen aufweisen können:
Im Normalfall wird mit einer der vorderen Sprühleisten, vorzugsweise der in Fahrtrichtung vordersten Sprühleiste, Reinigungsflüssigkeit auf die Reinigungsfläche aufgebracht zum Anfeuchten der Reinigungsfläche. Die zweite Sprühleiste kann dagegen Reinigungsflüssigkeit in Richtung und auf die Bürsten sprühen.

Es können jedoch auch vordere Sprühleisten verwendet werden für eine Vorreinigung, zum Beispiel ein Abblasen mittels Druckluft und/oder eine Staubabsaugung und/oder es können Vibratoren vorhanden sein, um die Reinigungsfläche mit Vibrationen, insbesondere Ultraschall-Vibrationen, zu beaufschlagen, um den darauf haftenden Schmutz zu lösen.

In Fahrtrichtung hinter der Bürste kann eine Sprühleiste vorhanden sein, die entweder ein Fluid zum Nachreinigen der Reinigungsfläche aufbringt, und/oder auch Druckluft auf die Reinigungsfläche aufbringt zum schnelleren Trocknen.

Auch eine Abziehlippe zum mechanischen Entfernen der Nässe von der Reinigungsfläche kann hinter der Bürste montiert sein. Falls Druckluftdüsen zum Trocknen ebenfalls vorhanden sind, befinden sich diese vorzugsweise in Fahrtrichtung hinter der Abziehlippe.

Der Reinigungskopf ist relativ zur Erstreckungsrichtung des ihn tragenden Armteiles drehbar mittels automatischer Ansteuerung, so dass er beispielsweise im Arbeitseinsatz schräg gestellt zur Querrichtung, also mit dem oberen Ende des Reinigungskopfes weiter vorne als das hintere Ende, eingesetzt werden kann und auch für alle notwendigen anderen Stellungen, zum Beispiel Transportstellungen, entsprechend gedreht werden kann.

Vorzugsweise ist der Reinigungskopf um mindestens zwei, besser drei lotrecht aufeinander stehenden Raumrichtungen verschwenkbar und automatisch auch während des Betriebes einstellbar.

Anstelle von Borsten weisen die Bürsten vorzugsweise Fließstreifen als Reinigungselemente auf, und werden im Arbeitseinsatz mit einer Drehzahl von lediglich **150** U/min bis **200** U/min, besser zwischen **170** U/min und **190** U/min, betrieben.

Da die Reinigungsarbeiten häufig bei Nacht durchgeführt werden, sind außer den üblichen Scheinwerfern des Trägerfahrzeuges am äußersten Auslegerarmteil und/oder am Rahmen des Reinigungskopfes und/oder am Fahrwerk des Reinigungsgerätes, zum Reinigungskopf hin gerichtet, Scheinwerfer vorhanden, vorzugsweise wasserdicht gekapselte LED-Scheinwerfer, die vorzugsweise ebenfalls in ihrer Abstrahlrichtung mittels der Steuerung gesteuert auf den Arbeitsbereich gerichtet werden können, und vorzugsweise automatisch und in Abhängigkeit von der Einstellungsveränderung von Auslegerarm und/oder Reinigungskopf mit verstellt werden.

Ein Scheinwerfer ist vorzugsweise auf einem Stativ angeordnet, welches zum Beispiel auf der Ladefläche des Trägerfahrzeuges montiert ist, und vorzugsweise teleskopierbar ausgebildet ist.

Damit die Bürste immer im richtigen Abstand zur Reinigungsfläche geführt wird, werden Sensoren, vorzugsweise berührungslos arbeitende Sensoren anstelle von Tastrollen oder ähnlichem, verwendet, insbesondere Ultraschallsensoren:
Diese befinden sich beispielsweise am Rahmen des Reinigungskopfes und messen den Abstand zur Reinigungsfläche. Ergänzend können auch am Trägerfahrzeug Sensoren vorhanden sein, die den seitlichen Abstand zur Reinigungsfläche messen und überwachen. Sämtliche Sensoren sind natürlich mit der zentralen Steuerung des Reinigungsgerätes gekoppelt. Die Sensoren können dabei auch in Fortschrittsrichtung verlaufende markante Konturen, wie beispielsweise die obere oder untere Endkante der Reinigungsfläche, abtasten und damit das Reinigungsgerät und/oder Trägerfahrzeug entlang dieser Kontur steuern.

Die Reinigungsflüssigkeit, mit der die Reinigung durchgeführt wird, wird in Vorratsbehältern vorgehalten, von denen sich einer oder mehrere auf der Ladefläche des Trägerfahrzeuges, insbesondere auf der vom Befestigungspunkt des Auslegerarmes gegenüberliegenden Seite, befinden. Dieser Befestigungspunkt ist allerdings meistens in Querrichtung entlang einer Querversatzschiene bezüglich des Trägerfahrzeuges verfahrbar.

Vorzugsweise befindet sich einer der Vorratsbehälter montiert vor der Front des Trägerfahrzeuges als Frontbehälter.

In den Vorratsbehältern befindet sich Reinigungsflüssigkeit oder Wasser, wobei unter Umständen beides separat voneinander benötigt wird. Die Vorratsbehälter sind so dimensioniert und angeordnet, dass sich alle Vorratsbehälter innerhalb der - in Fahrtrichtung betrachtet - Kontur des Reinigungsfahrzeuges befinden, um hier beim Manövrieren keine zusätzlichen Beschädigungsrisiken zu erzeugen.

Die Reinigungsflüssigkeit wird in der Regel mit einem Druck von **3** bar bis **4** bar aus den Düsen ausgebracht, was sich als guten Kompromiss zwischen Lösungsvermögen des Schmutzes und Minimierung des Beschädigungsrisikos bezüglich der Reinigungsflächen erwiesen hat.

Die Reinigungsflüssigkeit kann auch in einem besonders spannungsarmen Zustand auf der Reinigungsfläche aufgebracht werden, was bewirkt, dass das Abperlen der Reinigungsflüssigkeit von der Reinigungsfläche erleichtert wird und damit dessen Trocknung schneller vor sich geht.

Zu diesem Zweck kann ein ein elektrisches Feld erzeugender E-Feldgenerator nahe den Zuführungsleitungen für Reinigungsflüssigkeit z. B. an dem Reinigungskopf angeordnet werden, wobei die Zuführungsleitung für die Reinigungsflüssigkeit durch das Auge einer mit Strom beaufschlagten Teslaspule hindurch läuft. Dadurch wird die Oberflächenspannung der hindurchströmenden Flüssigkeit erniedrigt.

Ergänzend oder alternativ dazu kann die Reinigungsflüssigkeit vor dem aufbringen auch zum Beispiel mittels eines Ionen-Austauschers entsalzt oder gar vollständig entmineralisiert werden, um nach dem Trocknen Schlieren auf der Reinigungsfläche zu vermeiden.

Ferner kann die Reinigungsflüssigkeit vor dem Aufbringen auf die Reinigungsfläche aufgeheizt werden mittels einer Heizvorrichtung, um die Temperaturdifferenz zwischen der aufgesprühten Reinigungsflüssigkeit und der Oberfläche der Reinigungsfläche möglichst gering zu halten. Zu diesem Zweck wird vorzugsweise mittels eines Temperatursensors, der sich am Reinigungskopf oder am freien Ende des Auslegerarmes befinden kann, die Oberflächentemperatur der Reinigungsfläche gemessen und an die Steuerung gemeldet, die in Abhängigkeit davon die Heizvorrichtung in Richtung Minimierung der Temperaturdifferenz steuert.

Die Heizvorrichtung kann entweder mit dem Kühlsystem des Verbrennungsmotors des Trägerfahrzeuges betrieben werden oder eine separate, elektrische oder hydraulische, Heizvorrichtung sein.

Für den Fall, dass das Reinigungsfahrzeug auch während des Arbeitseinsatzes fährt, kann eine Blockiervorrichtung für die Federung des Fahrzeuges vorhanden sein, insbesondere in Form einer verriegelbaren vertikalen Achsstütze an einer oder beiden Achsen oder in Form eines verriegelbaren Torsions-Zusatzrahmens, um die Wankbewegungen des Fahrzeuges zu minimieren.

Die zentrale Steuerung des Reinigungsgerätes steuert primär den Abstand des Reinigungskopfes von der Reinigungsfläche, kann aber auch Schrägstellung und gegebenenfalls Teleskopierung der Armteile des Auslegerarmes und/oder die Schrägstellung des Reinigungskopfes zum Auslegerarm automatisch steuern, und ebenso die Ausrichtung der Scheinwerfer.

Mit einem solcherart gestalteten Reinigungsgerät sind folgende Vorgehensweisen im Einsatz möglich:
Während des Arbeitseinsatzes steht das Trägerfahrzeug neben der Reinigungsfläche still oder fährt in Fortschrittsrichtung entlang der Reinigungsflächen, während der Reinigungskopf - vorzugsweise schräg gestellt zur Querrichtung - sich über die gesamte Breite der Reinigungsfläche hinweg erstreckt, so dass in einem einzigen Durchgang die gesamte Fläche gereinigt werden kann.

Ein während der Reinigung stillstehendes Trägerfahrzeug bietet sich bei in Fortschrittsrichtung kurzen Flächen an, aber auch bei langen Flächen, wenn der Untergrund sehr uneben ist und deshalb die Reinigung der in Fortschrittsrichtung langen Reinigungsfläche abschnittsweise immer nur bei stillstehendem Trägerfahrzeug erfolgt. Falls während des Arbeitseinsatzes das Trägerfahrzeug verfahren wird, wird das Wanken vorzugsweise minimiert, zum Beispiel durch Blockieren der Federung des Trägerfahrzeuges.

In Fortschrittsrichtung vor der Bürstenreinigung erfolgt eine Vorreinigung, sei es mittels aufgesprühten Fluids oder auch eine trockene Vorreinigung, zum Beispiels mittels Druckluft und/oder Staubabsaugung und/oder Aufbringen von Vibrationen. In Fortschrittsrichtung hinter der Bürste folgt das mechanische Abziehen der Feuchtigkeit und/oder das Trocknen mittels ausgebrachter Druckluft.

Der Reinigungskopf wird von den auf dem Trägerfahrzeug befindlichen Vorratsbehältern mit Reinigungsflüssigkeit und/oder Wasser versorgt.

Sind diese leer, fährt das Trägerfahrzeug zu dem abgestellten Anhänger, auf dem sich weitere gefüllte Vorratsbehälter befinden. Aus diesen können die Vorratsbehälter des Trägerfahrzeuges durch Umpumpen nachgefüllt werden oder die Vorratsbehälter werden - vorzugsweise unter Benutzung des Auslegerarmes als Kran - zwischen Anhänger und Vorratsbehälter ausgetauscht.

Aufgrund der großen Längserstreckung des Bürstenkopfes ist die Transportstellung des Reinigungskopfes in der Praxis von Bedeutung:
Für weitere Transportstrecken wird der Reinigungskopf auf einem Ablagegestell des Anhängers abgelegt, welches bewirkt, dass sich der Reinigungskopf in Fahrtrichtung verlaufend oberhalb der auf dem Anhänger abgestellten Vorratsbehälter befindet. Das Ablagegestell ist dabei so gestaltet, dass selbst das Entnehmen und Aufsetzen von Vorratsbehältern auf dem Anhänger durch das Ablagegestell nicht behindert wird.

In diesem Transportzustand ist der Bürstenkopf vom Auslegerarm getrennt, der sich um eingeklappten Zustand oberhalb der Ladefläche des Trägerfahrzeuges befindet.

Für kurze Transportstrecken, also insbesondere innerhalb einer geschlossenen Anlage und nicht für das Verfahren auf öffentlichen Straßen, kann der Reinigungskopf am Auslegerarm verbleiben und mittels des Auslegerarmes in einer Transportstellung entweder seitlich neben dem Trägerfahrzeug, in Längsrichtung ausgerichtet, gehalten werden oder hinter dem Heck des Fahrzeuges querstehend, dann jedoch deutlich auf beiden Seiten über die Breite des Trägerfahrzeuges vorstehend.

Diese Transportstellungen sind vorzugsweise als fest in der Steuerung des Reinigungsgerätes einprogrammiert.

### c) Ausführungsbeispiele

Ausführungsformen gemäß der Erfindung sind im Folgenden beispielhaft näher beschrieben. Es zeigen:

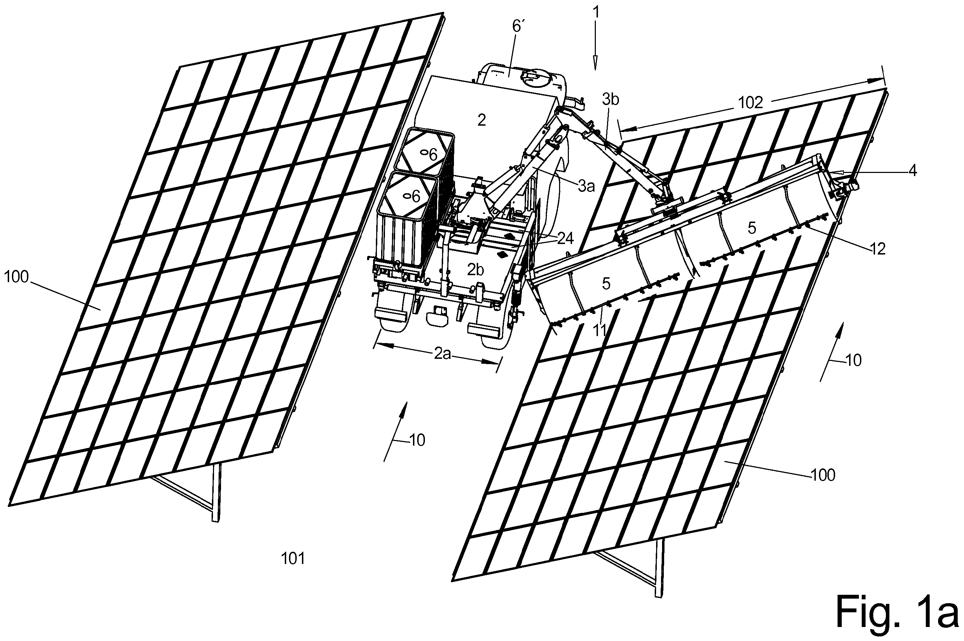

- Figur 1a:: das Reinigungsfahrzeug mit dem Reinigungsgerät im Arbeitseinsatz,

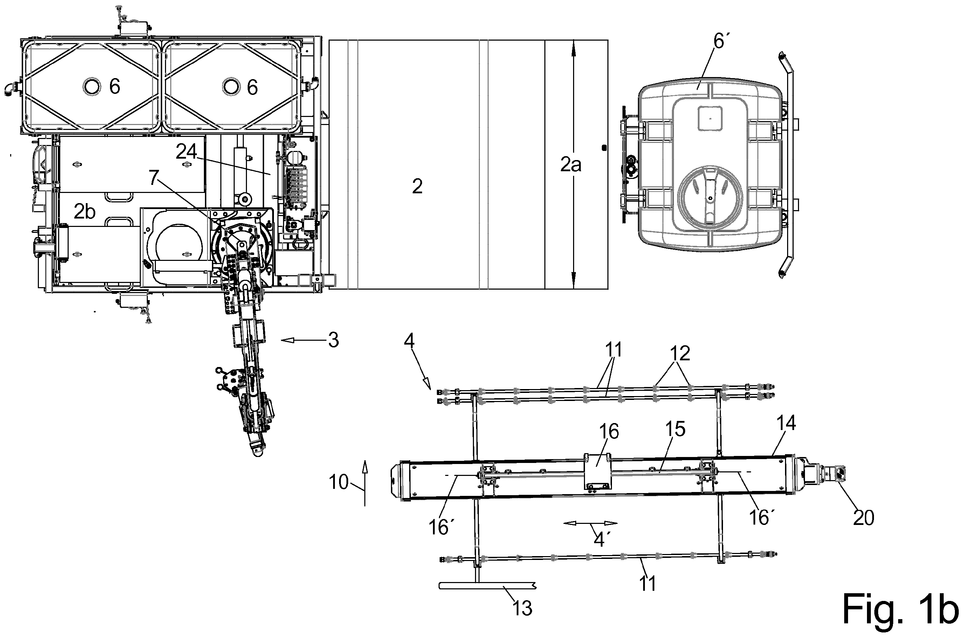

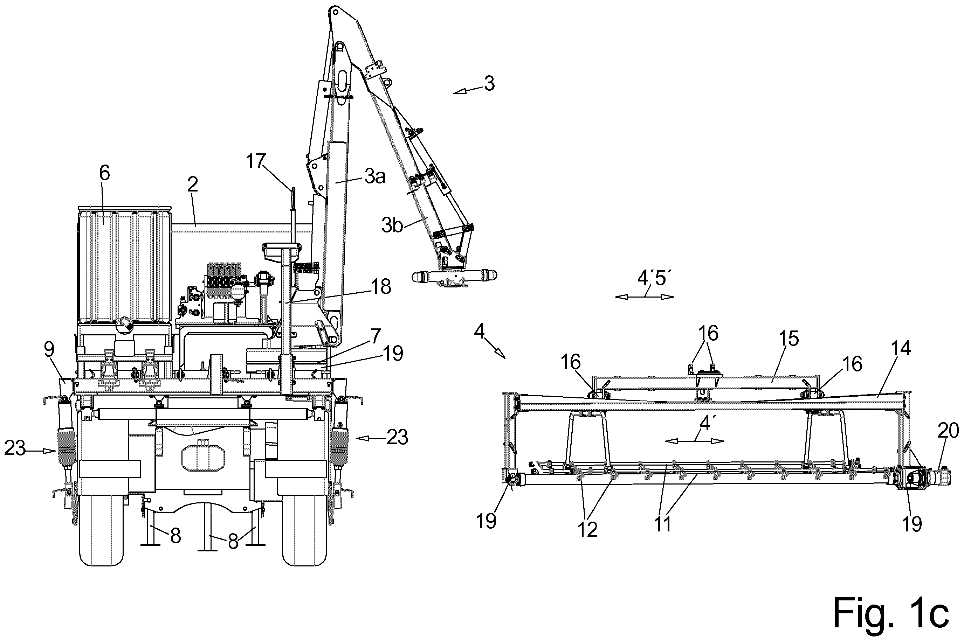

- Figur **1**b:: das Fahrzeug gemäß Figur **1** in der Aufsicht, allerdings mit abgekoppeltem separatem Reinigungskopf **4**, der hier aus Übersichtsgründen ohne Bürste dargestellt ist,
- Figur **1**c:: analog zu Figur **1**b, jedoch in der Fahrtrichtung des Fahrzeuges von hinten betrachtet,
- Figur **2**a:: das Reinigungsfahrzeug mit Anhänger und dort abgelegtem Reinigungskopf in einer ersten Transportstellung,

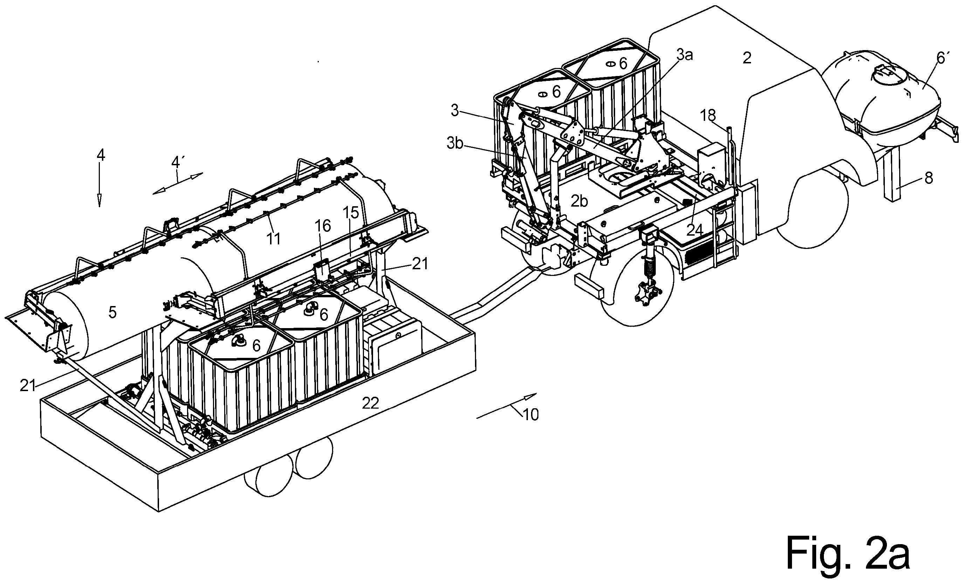

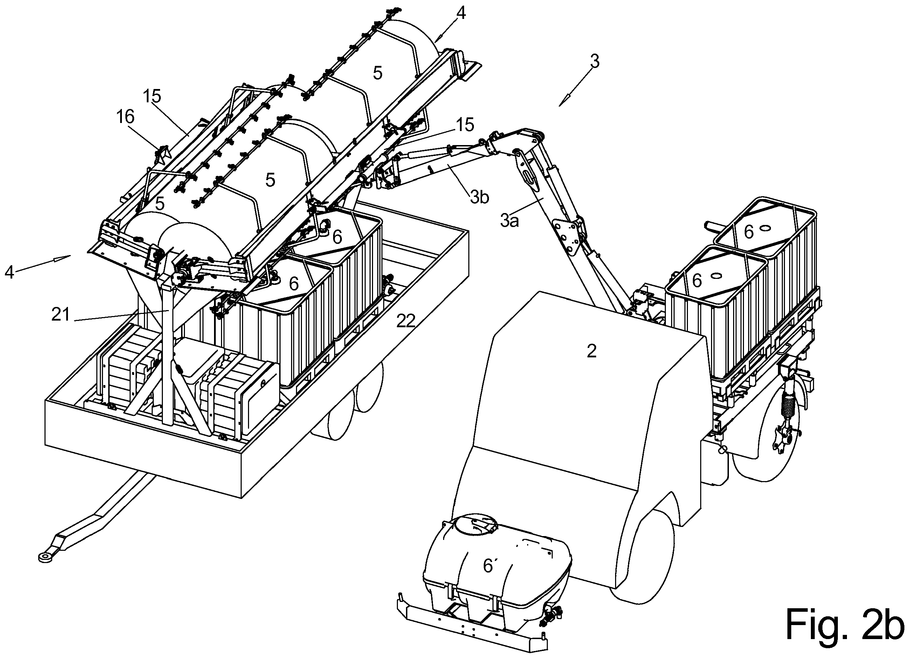

- Figur **2**b:: das Verbringen des Reinigungskopfes auf den Anhänger in die Transportstellung gemäß Figur **2**a und

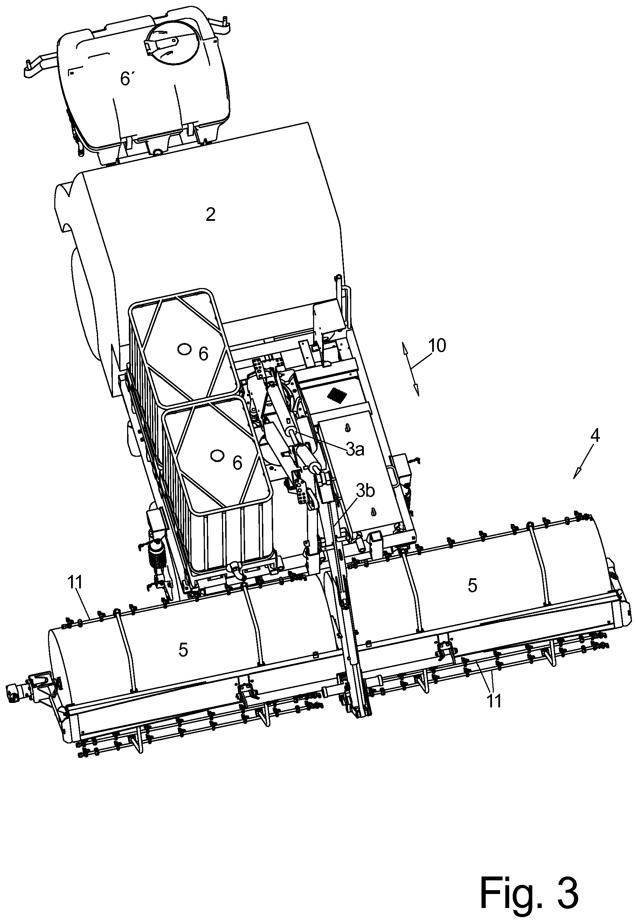

- Figur **3:**: das Fahrzeug mit dem Reinigungskopf in einer zweiten Transportstellung quer hinter dem Heck des Trägerfahrzeu-ges.

In **Figur 1a** ist die Reinigungsaufgabe des Reinigungsfahrzeuges **2** mit dem darauf befestigten Reinigungsgerät **1** dargestellt:
Auf dem Untergrund **101** sind in langen Reihen schrägstehende Reinigungsflächen **100** in Form von Solarpaneelen aufgebaut, die zu den Fahrwegen zwischen den Reihen hin auf einer Seite abfallen und eine Breite **102** besitzen, die deutlich größer ist als die Breite **2**a des Reinigungsfahrzeuges **2**.

Um solche Reinigungsflächen **100** effizient reinigen zu können, fährt ein Reinigungsfahrzeug **2** in den Gassen in Fahrtrichtung **10** zwischen den Reinigungsflächen **100** entlang und reinigt dabei diejenigen Reinigungsflächen **100** neben der Fahrgasse, die zu dieser Fahrgasse hin abfallen und zwar mit Hilfe eines Reinigungskopfes **4**, der mindestens eine rotierende Bürste **5** umfasst, und dessen Erstreckung mindestens so groß ist wie die Breite **102** der Reinigungsfläche, sodass in einem einzigen Arbeitsdurchgang die gesamte Breite **102** der Reinigungsflächen **100** gereinigt werden kann. Dieser sehr breite Reinigungskopf **4** ist in der Mitte an einem Auslegerarm befestigt, der auf der Ladefläche **2**b des Reinigungsfahrzeuges **2** befestigt ist und dort entlang von Versatzschienen **24** auch in Querrichtung verfahren werden kann.

Dabei verlaufen die Versatzschienen **24** vorzugsweise nur von der Mitte der Ladefläche bis zu der einen Außenseite, in diesem Fall der rechten Außenseite, während entlang des linken Randes der Ladefläche **2**b des Reinigungsfahrzeuges **2** hintereinander zwei Vorratsbehälter **6** mit Reinigungsflüssigkeit stehen, aus denen die Austrittsdüsen **12** an den Sprühleisten **11**, die sich vor und hinter der Bürste **5** des Reinigungskopfes **4** befinden, mit Reinigungsflüssigkeit versorgt werden können.

Details lassen sich besser an der Aufsicht und Heckansicht der **Figuren 1b** **und** **1c** erkennen, beispielsweise dass die Vorratsbehälter **6** nicht über die in der Heckansicht betrachtete Kontur **9** des Reinigungsfahrzeuges **2** hinaus vorstehen, und auch der Auslegerarm **3** in einer Transportstellung so zusammengelegt werden kann, dass er in Längsmitte der Ladefläche **2**b verläuft und ebenfalls nicht über die Kontur **9** hinaus vorsteht.

In den **Figuren 1b** **und** **1c** ist ferner besser zu erkennen, dass vor der Front des Reinigungsfahrzeuges **2** ein weiterer Vorratsbehälter **6**' montiert ist, um zusätzliche Reinigungsflüssigkeit mitnehmen zu können und auch um die Gewichtsverteilung des Fahrzeuges zu verbessern.

Der Frontbehälter **6**' kann auch Stützbeine **8** aufweisen, wie in Figur **2**a angedeutet und in Figur **1c** zu erkennen, um ihn nach Abkoppeln vom Reinigungsfahrzeug **2** sicher auf dem Untergrund abstellen zu können.

Um Wankbewegungen des Fahrzeuges aufgrund einer unebenen Fahrgasse zu vermeiden, was zu einer Beschädigung der Reinigungsflächen **100** führen könnte, kann die Federung der Hinterachse des Reinigungsfahrzeuges **2** deaktiviert werden mit Hilfe von außen zwischen Radnabe und Rahmen des Fahrzeuges montierten Blockiervorrichtungen **23**.

Ferner zeigt Figur **1**c, dass von der Ladefläche **2**b zusätzlich ein Stativ **18** nach oben ragt, an dessen oberen Ende ein Scheinwerfer **17** zum Beleuchten des Arbeitsbereiches an der Reinigungsfläche **100** angeordnet ist, da die Reinigung solcher Solarpaneele vorzugsweise bei Nacht stattfindet.

In den Figuren **1**b und **1**c ist der Reinigungskopf **4** zum einen abgekoppelt von dem Auslegerarm **3** separat daneben dargestellt, und ohne die Bürste **5**, die eine im rotierenden Zustand zylindrische Bürste **5** ist, welche um eine Rotationsachse rotiert, die parallel zur Erstreckungsrichtung **4**' des Reinigungskopfes **4** verläuft.

Wie die Figuren **1**b und **1**c zeigen, besteht der Rahmen **14** hauptsächlich aus einer U-förmigen Gabel, zwischen dessen freien Enden die hier nicht dargestellte Bürste **5** eingesetzt ist und mittels des am Rahmen **14** befestigten Motors **20** drehend angetrieben werden kann.

An diesem Rahmen **14** sind auch die parallel vor und hinter dem Rahmen verlaufenden Sprühleisten **11** mit Austrittsöffnungen **12** angeordnet, über die wahlweise Reinigungsflüssigkeit, klares Wasser, Druckluft oder ähnliches ausgebracht werden kann, je nach Ausrichtung der Austrittsdüsen **12** direkt auf die Reinigungsfläche **100** oder gerichtet gegen die Bürste **5**.

Dabei sind auf der in Fahrtrichtung **10** vorderen Seite des Reinigungskopfes vorzugsweise zwei Sprühleisten **11** kurz hintereinander angeordnet, von denen die in Fahrtrichtung **10** erste Flüssigkeit direkt gegen die Reinigungsfläche **100** gerichtet ist, zum Anweichen des dort anhaftenden Schmutzes, während die zweite Sprühleiste **11** Flüssigkeit auf die Bürste **5** sprüht, um diese immer nass genug zu halten.

In Figur **1**b ist ferner zusätzlich in Fahrtrichtung hinten, hinter der letzten Sprühleiste **11**, eine Abziehlippe **13** dargestellt, mit der die verbliebene Feuchtigkeit auf der Reinigungsfläche **100** abgezogen werden kann. Nicht zuletzt deshalb wird - wie in Figur **1**a ersichtlich - der Reinigungskopf **4** nicht exakt lotrecht zur Fahrtrichtung, der Fortschrittsrichtung **10** des Reinigungsprozesses, gestellt, sondern hierzu schräg, so dass das obere Ende des Reinigungskopfes **4** in Fahrtrichtung **10** weiter vorne läuft.

Wie **Figur 1a** ferner zeigt, kann der Reinigungskopf **4** in seiner Erstreckungsrichtung **4**' hintereinander zwei zueinander fluchtende zylindrische Bürsten **5** aufweisen, oder auch nur eine einzige, die sich über die gesamte Länge erstreckt, wie in der Variante der Figuren **1**b und **1**c dargestellt.

Die Figuren **2a** **und** **3** zeigen unterschiedliche Transportzustände des Reinigungsfahrzeuges **2**:
In **Figur 2a** zieht das Reinigungsfahrzeug **2** einen Anhänger **22**, auf dem sich weitere Vorratsbehälter **6** mit Reinigungsflüssigkeit befinden. Während der Reinigungsarbeiten ist dieser Anhänger **22** beiseite gestellt, jedoch kann das Reinigungsfahrzeug **2** aus dessen Vorratsbehältern **6** die auf der Ladefläche des Reinigungsfahrzeuges **2** stehenden Vorratsbehälter und/oder den Frontbehälter **6**' nachtanken.

Auf dem Anhänger **22** befindet sich weiterhin ein Ablagegestell **21**, welche sich über die Höhe der Vorratsbehälter **6** hinaus erstreckt und eine Art Brücke zum darauf Ablegen des Reinigungskopfes **4** darstellt, der dann abgekoppelt vom Auslegerarm **3** mit seiner Erstreckungsrichtung **4**' in Fahrtrichtung **10**, also in Längsrichtung des Anhängers **22**, auf diesem liegt und auf diese Art und Weise transportiert werden kann, indem das Gespann aus Fahrzeug **2** und Anhänger **22** die zugelassene Breite und Höhe für Straßenfahrten nicht überschreitet.

Das Ablagegestell **21** ist dabei vorzugsweise so konstruiert, dass auch bei darauf liegendem Reinigungskopf **4** die darunter befindlichen Vorratsbehälter **6** zumindest nachgefüllt, besser sogar vom Anhänger **22** entnommen werden können.

In dieser Transportstellung ist der Auslegerarm **3** - nur oberer Reinigungskopf **4** - entlang der Versatzschienen **24** zur Mitte des Fahrzeuges **2** hin verschoben, und der Unterarm **3**b soweit als möglich von unten her gegen den Oberarm **3**a herangeklappt, der in Fahrtrichtung **10** nach hinten gerichtet ist und nach hinten nur geringfügig über die Ladefläche **2**b vorsteht.

**Figur 2b** zeigt, wie das Reinigungsfahrzeug **2** neben den abgekoppelten Anhänger **22** fährt in einem solchen Abstand, dass es mittels eines Auslegerarmes **3** den Reinigungskopf **4** auf dem Ablagegestell **21** des Anhängers **22** ablegen und dann vom Auslegerarm **3** abkoppeln kann.

In Figur **2**b ist angedeutet, dass auf dem Ablagegestell **21** auch Platz für in Querrichtung nebeneinander liegende zwei, vorzugsweise in Erstreckungsrichtung **4**' unterschiedlich lange, Reinigungsköpfe **4** sein kann.

Da wegen des Ablegens und Abkoppelns des Reinigungskopfes **4** diese Transportstellung relativ aufwendig ist, wird sie nur eingenommen, um das Reinigungsfahrzeug auf öffentlichen Straßen verfahren zu können.

Für ein Verfahren innerhalb eines geschlossenen Betriebsgeländes, also in der Regel über vergleichsweise kurze Strecken, wird dagegen die Transportstellung gemäß Figur **3** gewählt:
Dabei ist der Auslegerarm **3** ebenfalls in Fahrzeugmitte verlaufend von seinem Befestigungspunkt auf der Ladefläche des Reinigungsfahrzeuges **2** aus in Fahrtrichtung **10** nach hinten gerichtet und trägt nach wie vor den Reinigungskopf **4**, der sich nunmehr in Querrichtung, vorzugsweise im rechten Winkel, zur Fahrtrichtung **10**, also der Längsrichtung des Reinigungsfahrzeuges **2**, hinter dem Heck des Reinigungsfahrzeuges befindet und dementsprechend auf beiden Seite deutlich über die Kontur **9** des Reinigungsfahrzeuges **2** vorsteht.

In dieser Transportstellung ist auch ein Durchfahren der Fahrgassen zwischen den Reihen von Solarpaneelen in aller Regel nicht möglich, da diese nur geringfügig breiter sind als das Reinigungsfahrzeug **2** selbst.

### BEZUGSZEICHENLISTE

- **1**: Reinigungsgerät
- **2**: Reinigungs-Fahrzeug
- **2**a: Breite
- **2**b: Ladefläche
- **3**: Auslegerarm
- **3**': Erstreckungsrichtung
- **3**a, b: Arm-Teil
- **4**: Reinigungs-Kopf
- **4**': Erstreckungsrichtung
- **5**: Bürste
- **5**': Längsrichtung
- **6**: Vorratsbehälter
- **6**': Frontbehälter
- **7**: Befestigungspunkt
- **8**: Stützbein
- **9**: Kontur
- **10**: Fahrtrichtung, Fortschrittsrichtung
- **11**: Sprühleiste
- **12**: Austrittsdüse
- **13**: Abziehlippe
- **14**: Rahmen
- **15**: Traverse
- **16**: Gelenk
- **16**': Gelenksachse
- **17**: Scheinwerfer
- **18**: Stativ
- **19**: Abstands-Sensoren
- **20**: Motor
- **21**: Ablagegestell
- **22**: Anhänger
- **23**: Blockiervorrichtung
- **24**: Versatzschiene

- **100**: Reinigungsfläche
- **101**: Untergrund
- **102**: Breite

## Patentansprüche

1. Reinigungsgerät (**1**) geeignet zur Montage auf einem Reinigungsfahrzeug (**2**) und geeignet zur Reinigung von ebenen Reinigungsflächen (**100**) mit
- mindestens einem Auslegerarm (**3**),
- an dessen Ende sich jeweils ein Reinigungskopf (**4**) mit wenigstens einer rotierenden Bürste (**5**) befindet,
- die wenigstens eine Bürste (**5**) eine Zylinderbürste ist mit einer axialen Erstreckung mindestens entsprechend der Breite (**102**) der Reinigungsfläche (**100**), gemessen quer zur Fortschrittsrichtung (**10**) der Reinigung oder
- die Bürste (**5**) mehrere quer zur Fortschrittsrichtung (**10**) der Reinigung beabstandete Topfbürsten umfasst,
**dadurch gekennzeichnet, dass**
- der Reinigungskopf (**4**) einen Rahmen (**14**) zum Aufnehmen der Bürste (**5**) umfasst sowie eine in Längsrichtung (**5**') der Bürsten (**5**) verlaufende Befestigungs-Traverse (**15**), an der sich die Kopplungseinrichtung (**16**) zum Ankoppeln an den Auslegerarm (**3**) befindet und
- zwischen der Traverse (**15**) und dem Rahmen (**14**) des Reinigungskopfes (**4**) Gelenke (**16**) vorhanden sind, die das Wegkippen des Reinigungskopfes (**4**) entgegen der Fortschrittsrichtung (**10**) zulassen.

2. Reinigungsgerät (**1**) nach Anspruch **1**,
**dadurch gekennzeichnet, dass**
die Gelenke (**16**) Gelenkachsen (**16**') aufweisen, die in Erstreckungsrichtung (**4**') des Reinigungskopfes (**4**) verlaufen.

3. Reinigungsgerät (**1**) nach einem der vorhergehenden Ansprüche,
**dadurch gekennzeichnet, dass**
der Auslegerarm (**3**) in der Mitte der Erstreckung (**4**') des Reinigungskopfes **(**4) angreift und der Reinigungskopf (**4**) in seiner Neigung relativ zum Ende des Auslegerarmes (**3**) um drei zueinander quer stehende Raumrichtungen verschwenkbar und einstellbar ist.

4. Reinigungsgerät (**1**) nach einem der vorhergehenden Ansprüche,
**dadurch gekennzeichnet, dass**
am Rahmen (**14**) des Reinigungskopfes (**4**) oder am äußersten Auslegerarmteil (**3**b) Scheinwerfer (**17**) angeordnet sind, die in ihrer Abstrahlrichtung veränderbar und ansteuerbar sind.

5. Reinigungsgerät (**1**) nach einem der vorhergehenden Ansprüche,
**dadurch gekennzeichnet, dass**
der Reinigungskopf (**4**) in Fortschrittsrichtung (**10**) vor der Bürste (**5**) zwei Sprühleisten (**11**) aufweist, von denen die in Fortschrittsrichtung (**10**) vordere auf die Reinigungsfläche (**100**) gerichtet ist und die in Fortschrittsrichtung (**10**) hintere auf den Umfang der Bürste (**5**) gerichtet ist, deren Drehrichtung so gewählt ist, dass sie am Kontaktpunkt mit der Reinigungsfläche (**100**) der Fortschrittsrichtung (**10**) entgegen gerichtet ist.

6. Reinigungsgerät (**1**) nach einem der vorhergehenden Ansprüche,
**dadurch gekennzeichnet, dass**
der Reinigungskopf (**4**) berührende oder nicht berührende Abstandssensoren (**19**) zum Erfassen einer markanten, längs verlaufenden Kontur, insbesondere der Außenkante der Reinigungsfläche (**100**) aufweist, insbesondere ein oder mehrere Tastrollen oder optische Abstandssensoren, insbesondere Ultraschallsensoren.

7. Reinigungsgerät (1) nach einem der vorhergehenden Ansprüche,
**dadurch gekennzeichnet, dass**
- jeder Reinigungskopf (**4**) eine Vorreinigungseinheit für die Grobreinigung aufweist, die Sauglufteinlässe und/oder Vibratoren aufweist,
- und insbesondere die Sauglufteinlässe über Druckluftejektoren als Saugluftquelle verfügen.

8. Reinigungsgerät (**1**) nach einem der vorhergehenden Ansprüche,
**dadurch gekennzeichnet, dass**
das Reinigungsgerät (**1**) eine Steuerung (**30**) umfasst, welche die Teleskopierung oder Schrägstellung der Armteile (**3**a, b) oder die Schrägstellung des Reinigungskopfs (**4**) zum Auslegerarm (**3**) oder den Abstand des Reinigungskopfs (**4**) von der zu reinigenden Fläche (**100**) automatisch in Abhängigkeit der Signale der Sensoren (**19**) steuert.

9. Reinigungsgerät nach einem der vorhergehenden Ansprüche,
**dadurch gekennzeichnet, dass**
- entweder ein E-Feldgenerator nahe den Zuführungsleitungen für Reinigungsflüssigkeit an den Reinigungskopf (**4**) angeordnet ist und die Zuführungsleitung für Reinigungsflüssigkeit durch das Auge einer Teslaspule hindurch verläuft,
- oder in den Zuführungsleitungen für Reinigungsflüssigkeit an den Reinigungskopf (**4**) ein Ionenaustauscher angeordnet ist, der die Reinigungsflüssigkeit vollständig entsalzt und/oder entmineralisiert.

10. Reinigungsgerät (**1**) nach einem der vorhergehenden Ansprüche,
**dadurch gekennzeichnet, dass**
in den Zuführungsleitungen für Reinigungsflüssigkeit an den Reinigungskopf (**4**) eine Heizvorrichtung angeordnet ist zum Aufheizen der Reinigungsflüssigkeit und am Reinigungskopf (**4**) oder am freien Ende des Auslegerarmes einen Temperatursensor angeordnet ist zum Messen der Oberflächentemperatur der Reinigungsfläche (**100**) und mittels der Steuerung das Aufheizen der Reinigungsflüssigkeit in Abhängigkeit von der gemessenen Oberflächentemperatur erfolgt.

11. Reinigungsgerät (**1**) gemäß einem der vorhergehenden Ansprüche mit einem Reinigungsfahrzeug (**2**), das das Reinigungsgerät (**1**) trägt,
**dadurch gekennzeichnet, dass**
das Reinigungsgerät (**1**) wenigstens eine Sprühleiste (**11**) zum Ausbringen von Reinigungsflüssigkeit oder Wasser aufweist sowie wenigstens einen Vorratsbehälter (**6**) für Reinigungsflüssigkeit oder Wasser aufweist, der außermittig auf der vom Befestigungspunkt (**7**) des Auslegerarms (**3**) gegenüberliegenden Seite auf der Ladefläche (**2**b) des Reinigungsfahrzeuges (**2**) angeordnet ist.

12. Reinigungsgerät (**1**) gemäß einem der vorhergehenden Ansprüche mit einem Reinigungsfahrzeug (**2**), das das Reinigungsgerät (**1**) trägt,
**dadurch gekennzeichnet, dass**
das Reinigungsfahrzeug (**2**) eine Blockiervorrichtung (**23**) für die Federung umfasst, die wenigstens auf einer Seite des Fahrzeuges (**2**) wirksam ist, insbesondere in Form eines verriegelbaren Torsions-Zusatzrahmens oder einer verriegelbaren vertikalen Achsstütze an der ungelenkten Achse.

13. Reinigungsgerät (**1**) gemäß einem der vorhergehenden Ansprüche mit einem Reinigungsfahrzeug (**2**), das das Reinigungsgerät (**1**) trägt,
**dadurch gekennzeichnet, dass**
der Reinigungskopf (**4**) in seiner Erstreckungsrichtung (**4**') mindestens **1**,**5-**fach, besser mindestens **2**fach, so lang ist wie die Breite (**2**a) des Reinigungsfahrzeuges (**2**).

14. Reinigungsgerät (**1**) gemäß einem der vorhergehenden Ansprüche mit einem Reinigungsfahrzeug (**2**), das das Reinigungsgerät (**1**) trägt,
**dadurch gekennzeichnet, dass**
das Reinigungsgerät (**1**) wenigstens einen Vorratsbehälter (**6**) montiert vor der Front des Reinigungsfahrzeuges (**2**) als Frontbehälter (**6**') aufweist, und insbesondere dieser Frontbehälter (**6**') nach unten ausfahrbare Stützbeine (**8**) zum Abstellen auf dem Untergrund (**101**) aufweist.

15. Reinigungsgerät (**1**) gemäß einem der vorhergehenden Ansprüche mit einem Reinigungsfahrzeug (**2**), das das Reinigungsgerät (**1**) trägt,
**dadurch gekennzeichnet, dass**
auf einem vom Reinigungsfahrzeug (**2**) gezogenen Anhänger (**22**) ein Ablagegestell (**21**) zum Ablegen des Reinigungskopfes (**4**) oberhalb der Vorratsbehälter (**6**) auf dem Anhänger (**22**) vorhanden ist, welches insbesondere auf der linken und rechten Hälfte des Anhängers (**22**) zwei verschiedene Ablagepositionen umfasst und die Vorratsbehälter (**6**) für Reinigungsflüssigkeit in zwei in Längsrichtung (**10**) verlaufenden Reihen auf dem Anhänger (**22**) abgestellt sind.

16. Verfahren zum Reinigen von ebenen Reinigungsflächen (**100**) mittels eines auf einem Reinigungsfahrzeug (**2**) angeordneten Reinigungsgerätes (**1**) **gemäß einem der vorhergehenden Ansprüche wobei**
- das Reinigungsfahrzeug (**2**) in der Arbeitsstellung in Fortschrittsrichtung (**10**) entlang der Reinigungsfläche (**100**) neben der Reinigungsfläche (**100**) fährt oder stillsteht und
- der Reinigungskopf (**4**) schräg gestellt zur Querrichtung sich über die gesamte Breite der Reinigungsfläche (**100**) erstreckend bewegt wird **dadurch gekennzeichnet, dass**
- in der Transportstellung der Reinigungskopf (**4**) vom Auslegerarm (**3**) gelöst auf einem vom Reinigungsfahrzeug (**2**) gezogenen Anhänger (**22**) abgelegt wird oberhalb von auf der Ladefläche des Anhängers (**22**) angeordneten Vorratsbehältern (**6**) für Reinigungsflüssigkeit.

17. Verfahren nach Anspruch **16**,
**dadurch gekennzeichnet, dass**
- in der Transportstellung der Reinigungskopf (**4**) auf einem Ablagegestell (**21**) oberhalb der Vorratsbehälter (**6**) ablegbar ist, welches auf der linken und rechten Hälfte des Anhängers (**22**) zwei verschiedene Ablagepositionen umfasst und die Vorratsbehälter (**6**) für Reinigungsflüssigkeit in zwei in Längsrichtung (**10**) verlaufenden Reihen auf dem Anhänger (**22**) abgestellt werden.

18. Verfahren nach einem der vorhergehenden Verfahrensansprüche,
**dadurch gekennzeichnet, dass**
die auf dem Reinigungsfahrzeug (**2**) vorhandenen Vorratsbehälter (**6**) für Reinigungsflüssigkeit gegen auf dem Anhänger (**22**) befindliche volle Vorratsbehälter ausgetauscht werden mit Hilfe des Auslegerarmes (**3**), von dem der Reinigungskopf (**4**) entfernt wurde.

19. Verfahren nach einem der vorhergehenden Verfahrensansprüche,
**dadurch gekennzeichnet, dass**
in Fortschrittsrichtung (**10**) vor der Reinigung mittels rotierender Bürsten (**5**) und Reinigungsflüssigkeit eine trockene Vorreinigung mittels Übertragung von Vibrationen auf die zu reinigende Fläche erfolgt.

## Claims

1. A cleaning device (1) configured to be mounted on a cleaning vehicle (2) and configured to clean flat cleaning surfaces (100), the cleaning device comprising:
- at least one outrigger arm (3);
- wherein at least one cleaning head (4) with at least one rotating brush (5) is arranged at the at least one outrigger arm (3);
- wherein the at least one brush (5) is a cylindrical brush with an axial extension corresponding at least to a width (102) of a cleaning surface (100) measured transversal to an advance direction (10) of the cleaning; or
- wherein the at least one brush (5) includes plural pot shaped brushes that are offset transversal to the advance direction (10) of the cleaning,
**characterized in that**
- the cleaning head (4) includes a frame (14) for receiving the brush (5) and a transversal attachment beam (15) that extends in a longitudinal direction (5') of the brushes (5) wherein a coupling arrangement (16) for coupling at the outrigger arm (3) is arranged at the transversal attachment beam (15); and
- joints (16) are arranged between the transversal beam (15) and the frame (14) of the cleaning head (4) wherein the joints facilitate a tilting of the cleaning head (4) against the advance direction (10).

2. The cleaning device (1) according to claim 1,
**characterized in that**
the joints (16) have joint axes (16') that extend in the extension direction (4') of the cleaning head (4).

3. The cleaning device (1) according to one of the preceding claims,
**characterized in that** the outrigger arm (3) engages in a center of an extension (4') of the cleaning head (4) and the cleaning head (4) is inclination adjustable relative to an end of the outrigger arm (3) about three directions in space that are perpendicular to each other.

4. The cleaning device (1) according to one of the preceding claims,
**characterized in that**
head lights (17) are arranged at the frame (14) of the cleaning head (4) or at an outermost outrigger arm portion (3b) wherein a radiation direction of the head lights is adjustable and controllable.

5. The cleaning device (1) according to one of the preceding claims,
**characterized in that**
the cleaning head (4) includes two spray bars (11) in the advance direction (10) in front of the at least one brush (5) wherein a front spray bar in the advance direction (10) is directed onto the cleaning surface (100) and a spray bar that is behind in the advance direction (10) is oriented onto a circumference of the brush (5) wherein a rotation direction of the brush (5) is configured so that it is oriented against the advance direction (10) at a contact point with the cleaning surface (100).

6. The cleaning device (1) according to one of the preceding claims,
**characterized in that**
the cleaning head (4) has contacting or non-contacting distance sensors (9) for capturing a well-marked longitudinally oriented contour, in particular of the outer edge of the cleaning surface (100), in particular one or plural scanning rollers or optical distance sensors, in particular ultrasound sensors.

7. The cleaning device (1) according to one of the preceding claims,
**characterized in that**
- each cleaning (4) includes a pre cleaning unit for coarse cleaning which includes suction air inlets or vibrators, and
- in particular the suction air inlets include compressed air injectors configured as a suction air source.

8. The cleaning device (1) according to one of the preceding claims,
**characterized in that**
the cleaning device (2) includes a control (30) which controls the telescoping or slanted arrangement of the arm portion (3a, b) or the slanted arrangement of the cleaning head (4) relative to the outrigger arm (3) or the distance of the cleaning head (4) from the cleaning surface (100) automatically as a function of the signals of the sensors (19).

9. The cleaning device (1) according one of the preceding claims,
**characterized in that**
- an electrical field generator is arranged proximal to feed conduits for cleaning fluid at the cleaning head (4) and the feed conduit for the cleaning fluid runs through a core of a Tesla coil, or
- an ion exchanger is arranged in the feed conduits for the cleaning fluid at the cleaning head (4) wherein the ion exchanger completely desalinates and/or demineralizes the cleaning fluid.

10. The cleaning device (1) according to one of the preceding claims,
**characterized in that**
a heating device is arranged in the feed conduits of the cleaning fluid to the cleaning head (4) heating the cleaning fluid and a temperature sensor is arranged at the cleaning head (4) of at a free end of the outrigger arm for measuring a surface temperature of the cleaning surface (100) wherein the control controls a heating of the cleaning fluid as a function of a measured surface temperature.

11. The cleaning device (1) according to one of the preceding claims attached to a cleaning vehicle (2),
**characterized in that**
the cleaning device (1) includes at least one spray bar (11) for dispensing cleaning fluid or water and at least one storage container (6) for cleaning fluid or water, wherein the storage container is arranged eccentrically on a side of a loading surface (2b) of the cleaning vehicle (2) that is arranged opposite to an attachment point (7) of the outrigger arm (3).

12. The cleaning device (1) according to one of the preceding claims attached at a cleaning vehicle (2),
**characterized in that**
the cleaning vehicle (2) includes a blocking device (23) for a suspension wherein the blocking device is active at least on one side of the vehicle (2) and configured in particular as a lockable supplemental torsion frame or a lock able vertical axle support at the non-steered axle.

13. The cleaning device (1) according one of the preceding claims attached at a cleaning vehicle (2),
**characterized in that**
the cleaning head (4) has a length in its extension direction (4'), wherein the length corresponds to at least 1.5 times, better 2 times the width (2a) of the cleaning vehicle (2).

14. The cleaning device (1) according to one of the preceding claims attached at a cleaning vehicle (2),
**characterized in that**
the cleaning device (1) includes at least one storage container (6) that is mounted as a front container (6') in front of the cleaning vehicle (2) and in particular the front container (6') includes downward extendable support legs (8) for placement on a ground (101).

15. The cleaning device (1) according to one of the preceding claims attached to a cleaning vehicle (2),
**characterized in that**
a trailer (22) that is pulled by the cleaning vehicle (2) includes a placement frame (21) for placement of the cleaning head (4) above the storage containers (6) on the trailer (22) wherein the storage frame includes two different storage positions in particular on a left half and on a right half of the trailer (22) and the storage containers (6) for the cleaning fluid are placed on the trailer (22) in two rows that extend in the longitudinal direction (10).

16. A method for cleaning flat cleaning surfaces (100) by a cleaning device (1) attached at a cleaning vehicle (2) according to one of the preceding claims, wherein
- the cleaning vehicle (2) moves or stands still in the advance direction (10) along the cleaning surface (100) adjacent to the cleaning surface (100), or
- the cleaning head (4) moves at a slant angle to the transversal direction over an entire width of the cleaning surface (100),
**characterized in that**
- the cleaning head (4) is disengaged from the outrigger arm (3) in the transport position, stored on a trailer (22) that is pulled by the cleaning vehicle (2) wherein the storing is performed above storage containers (6) for cleaning fluid that are arranged above the loading surface of the trailer (22).

17. The method according to claim 16,
**characterized in that**
- the cleaning head (4) is storable in the transport position on a storage frame (21) above the storage containers (6), wherein the storage frame includes two different storage positions on a left half and on a right half of the container (22) and the storage container (6) for the cleaning fluid are placed in two rows that extend in the longitudinal direction (10) on the trailer (22) surfaces (100).

18. The method according to one of the preceding method claims,
**characterized in that**
the storage containers (6) for the cleaning fluid that are provided on the cleaning vehicle (2) are replaced with full storage containers (6) that are arranged on the trailer (22) wherein the replacement is performed by the outrigger arm (3) from which the cleaning head (4) was removed.

19. The method according to one of the preceding method claims, **characterized in that** a dry pre cleaning by transmission of vibrations onto the cleaning surface is performed in the advance direction (10) before cleaning by rotating brushes (5) and cleaning liquid.

## Revendications

1. Appareil de nettoyage (**1**), adapté pour être monté sur un véhicule de nettoyage (**2**) et adapté pour le nettoyage de surfaces planes (**100**) avec
- au moins un bras de prolongement (**3**),
- avec, à son extrémité, une tête de nettoyage (**4**) respective avec au moins une brosse tournante (**5**),
- ladite au moins une brosse (**5**) étant une brosse cylindrique avec une extension axiale qui correspond au moins à la largeur (**102**) de la surface de nettoyage (**100**), mesuré orthogonalement au sens de progression (**10**) du nettoyage ou
- la brosse (**5**) comprenant plusieurs brosses boisseau espacées orthogonalement au sens de progression (**10**) du nettoyage,
**caractérisé en ce que**
- la tête de nettoyage (**4**) comprend un cadre (**14**) pour recevoir la brosse (**5**) ainsi qu'une traverse de fixation (**15**) s'étendant dans le sens longitudinal (**5**') des brosses (**5**) recevant le dispositif d'accouplement (**16**) pour accoupler le bras de prolongement (**3**), et
- par la présence d'articulations (**16**) entre la traverse (**15**) et le cadre (**14**) de la tête de nettoyage (**4**) qui permettent le basculement de la tête de nettoyage (**4**) contre le sens de progression (**10**).

2. Appareil de nettoyage (**1**) selon la revendication 1,
**caractérisé en ce que**
les articulations (**16**) comprennent des axes d'articulation (**16**') s'étendant dans le sens d'extension (**4**') de la tête de nettoyage (**4**).

3. Appareil de nettoyage (**1**) selon une des revendications précédentes,
**caractérisé en ce que**
le bras de prolongement (**3**) engage le centre de l'extension (**4**') de la tête de nettoyage (**4**) et **en ce que** la tête de nettoyage (**4**) est pivotable et réglable en ce qui concerne son inclinaison par rapport à l'extrémité du bras de prolongement (**3**) autour de trois sens spatiaux, transversaux les uns aux autres.

4. Appareil de nettoyage (**1**) selon une des revendications précédentes,
**caractérisé en ce que**
des projecteurs (**17**) dont le sens de projection est variable et peut être commandé, sont arrangés au cadre (**14**) de la tête de nettoyage (**4**) ou au point extrême du bras de prolongement (**3b**).

5. Appareil de nettoyage (**1**) selon une des revendications précédentes,
**caractérisé en ce que**
la tête de nettoyage (**4**) comprend deux bras d'aspersion (**11**) devant la brosse (**5**) dans le sens de progression (**10**), dont la brosse avant dans le sens de progression (**10**) est orientée vers la surface de nettoyage (**100**) et dont la brosse arrière dans le sens de progression (**10**) est orientée vers la circonférence de la brosse (**5**), dont le sens de rotation est choisi de sorte qu'il est opposé au sens de progression (**10**) du nettoyage au point de contact avec la surface de nettoyage (**100**).

6. Appareil de nettoyage (**1**) selon une des revendications précédentes,
**caractérisé en ce que**
la tête de nettoyage (**4**) comprend des capteurs de distance (**19**) avec ou sans contact pour détecter un contour marquant longitudinal, en particulier du bord extérieur de la surface de nettoyage (**100**), en particulier un ou plusieurs rouleaux de palpage ou des capteurs de distance optiques, en particulier des capteurs ultrasoniques.

7. Appareil de nettoyage (**1**) selon une des revendications précédentes,
**caractérisé en ce que**
- chaque tête de nettoyage (**4**) comprend une unité de nettoyage préalable pour le nettoyage grossier comprenant des entrées d'air d'aspiration ou/et des vibrateurs,
- les entrées d'air d'aspiration comprenant en particulier des éjecteurs d'air comprimé en tant que source d'air d'aspiration.

8. Appareil de nettoyage (**1**) selon une des revendications précédentes,
**caractérisé en ce que**
le dispositif de nettoyage (**1**) comprend une commande (**30**) commandant automatiquement le télescopage ou l'inclinaison des parties de bras (**3**a, b) ou l'inclinaison de la tête de nettoyage (**4**) par rapport au bras de prolongement (**3**) ou la distance entre la tête de nettoyage (**4**) et la surface de nettoyage (**100**) en fonction des signaux des capteurs (**19**).

9. Appareil de nettoyage selon une des revendications précédentes,
**caractérisé en ce que**
- soit, un générateur de champ électrique est arrangé à proximité des conduits d'alimentation en liquide de nettoyage à la tête de nettoyage (**4**) et **en ce que** le conduit d'alimentation en liquide de nettoyage passe par le centre d'une bobine tesla,
- soit, un échangeur d'ions est arrangé dans les conduits d'alimentation en liquide de nettoyage à la tête de nettoyage (**4**), pour le dessalage ou la déminéralisation complète du liquide de nettoyage.

10. Appareil de nettoyage (**1**) selon une des revendications précédentes,
**caractérisé en ce que**
un dispositif de chauffage pour chauffer le liquide de nettoyage est arrangé dans les conduits d'alimentation en liquide de nettoyage à la tête de nettoyage (**4**) ou **en ce qu'**un capteur de température est arrangé à l'extrémité libre du bras de prolongement ou à la tête de nettoyage (**4**) pour mesurer la température de surface de la surface de nettoyage (**100**) et **en ce que** le chauffage du liquide de nettoyage est réalisé par la commande en fonction de la température de surface mesurée.

11. Appareil de nettoyage (**1**) selon une des revendications précédentes, avec un véhicule de nettoyage (**2**) portant l'appareil de nettoyage (**1**),
**caractérisé en ce que**
l'appareil de nettoyage (**1**) comprend au moins un bras d'aspersion (**11**) pour appliquer du liquide de nettoyage ou de l'eau ainsi qu'un réservoir (**6**) pour du liquide de nettoyage ou de l'eau qui est arrangé hors du centre au côté opposé au point de fixation (**7**) du bras de prolongement (**3**) sur la surface de chargement (**2**b) du véhicule de nettoyage (**2**).

12. Appareil de nettoyage (**1**) selon une des revendications précédentes, avec un véhicule de nettoyage (**2**) portant l'appareil de nettoyage (**1**),
**caractérisé en ce que**
le véhicule de nettoyage (**2**) comprend un dispositif de blocage (**23**) pour le système de suspension, effectif sur au moins un côté du véhicule (**2**), en particulier sous forme d'un cadre supplémentaire de torsions verrouillable ou d'une béquille d'axe verticale verrouillable à l'axe non articulé.

13. Appareil de nettoyage (**1**) selon une des revendications précédentes,
avec un véhicule de nettoyage (**2**) portant l'appareil de nettoyage (**1**),
**caractérisé en ce que** la tête de nettoyage (**4**) est, dans son sens d'extension (**4**') **1,5** fois, mieux encore **2** fois plus longue que la largeur (**2**a) du véhicule de nettoyage (**2**) de l'appareil de nettoyage (**1**).

14. Appareil de nettoyage (**1**) selon une des revendications précédentes, avec un véhicule de nettoyage (**2**) portant l'appareil de nettoyage (**1**),
**caractérisé en ce que**
l'appareil de nettoyage (**1**) comprend au moins un réservoir (**6**) monté devant le côté avant du véhicule de nettoyage (**1**) en tant que réservoir avant (**6**') et **en ce que** ce réservoir avant (**6**') comprend des jambes de support (**8**) qui peuvent être déployées vers le bas, pour poser le réservoir sur le sol (**101**).

15. Appareil de nettoyage (**1**) selon une des revendications précédentes, avec un véhicule de nettoyage (**2**) portant l'appareil de nettoyage (**1**),
**caractérisé par**
la présence d'un support de dépôt (**21**) sur une remorque (**22**) tractée par le véhicule de nettoyage (**2**) pour déposer la tête de nettoyage (**4**) au-dessus du réservoir (**6**) sur la remoque (**22**), comprenant deux positions de repos différentes, en particulier sur la moitié gauche et la moitié droite de la remorque (**22**) et en ce que les réservoirs (**6**) pour le liquide de nettoyage sont déposés sur la remorque (**22**) en deux rangs s'étendant dans un sens longitudinal (**10**).

16. Procédé pour nettoyer des surfaces de nettoyage planes (**100**) au moyen d'un appareil de nettoyage (**1**) monté sur un véhicule de nettoyage (**2**) selon une des revendications précédentes, où
- dans la position de travail le véhicule de nettoyage (**2**) se déplace dans les sens de la progression (**10**) le long de la surface de nettoyage (**100**) à côté de la surface de nettoyage (**100**) ou est à l'arrêt, et
- la tête de nettoyage (**4**) est déplacée de manière inclinée par rapport au sens transversal, s'étendant sur l'entière largeur de la surface de nettoyage (**100**),
**caractérisé en ce que**
- dans la position de transport, la tête de nettoyage (**4**) est détachée du bras de prolongement (**3**) et posée sur une remorque (**22**) tractée par le véhicule de nettoyage (**2**), au-dessus de réservoirs (**6**) pour le liquide de nettoyage arrangés sur la surface de chargement de la remorque (**22**).

17. Procédé selon la revendication **16**,
**caractérisé en ce que**
- dans la position de transport, la tête de nettoyage (**4**) peut être posée sur un support de dépôt (**21**) au-dessus des réservoirs (**6**) comprenant deux positions de repos différentes sur la moitié gauche et la moitié droite de la remorque (**22**) et **en ce que** les réservoirs (**6**) pour le liquide de nettoyage sont déposés sur la remorque (**22**) en deux rangs s'étendant dans un sens longitudinal (**10**).

18. Procédé selon une des revendications précédentes,
**caractérisé en ce que**
les réservoirs (**6**) pour le liquide de nettoyage présents sur le véhicule de nettoyage (**2**) sont remplacés par des réservoirs pleins, présents sur la remorque (**22**), au moyen du bras de prolongement (**3**) duquel la tête de nettoyage (**4**) a été retirée.

19. Procédé selon une des revendications précédentes,
**caractérisé en ce que**
un nettoyage sec préliminaire est effectué dans le sens de progression (**10**) au moyen de brosses tournantes (**5**) et de liquide de nettoyage au moyen d'une transmission de vibrations à la surface à nettoyer.
